# EUROPEAN PATENT APPLICATION

(11) **EP 1 830 569 A1**
(43) Date of publication of application: **05.09.2007**
(21) Application number: 06004228.0
(22) Date of filing: 02.03.2006
(51) Int. Cl.: H04N 7/167, H04N 5/00

(54) **Dual interface conditional access device and method for operating the same**

(71) Applicant: Twinhan Technology Co., Ltd., Hsi-Chih 221 Taipei Hsien (TW)
(72) Inventor: Liu, Nick, Hsi-Chih 221 Taipei Hsien (TW)
(74) Representative: Viering, Jentschura & Partner

(57) **Abstract**

A dual interface conditional access device includes at least a transport stream interface, a conditional access module, a personal computer card controller and an interface-connected unit. The conditional access module receives a first transport stream transmitted from the interface-connected unit, and transform to output a second transport stream or a third transport stream. Then, the personal computer card controller transforms the second transport stream into a personal computer card interface data stream. Finally, the interface-connected unit receives the personal computer card interface data stream or the third transport stream, and output to a personal computer card interface reader or a common interface reader.

## Description

### BACKGROUND OF THE INVENTION

### 1. Field of the invention

The present invention relates to a conditional access device and a method for operating the same and, more particularly, to a dual interface conditional access device and a method for operating the same.

### 2. Description of Related Art

With continual broadcasting of digital TV channels worldwide, conditional access (CA) already used in the present cable TV system has been taken more seriously, and has become more matured and diversified. In addition to providing free digital broadcast services, many novel value-added services, such as electronic commerce, video on demand, online game, pay per view (PPV) and personalized value-added service, can be derived from today's digital TV broadcast networks. In order to make sure these new services can be realized under safe, open and controllable conditions, a good conditional access has become the technology safeguard of digital TV payment services.

The operation methods of the present conditional access system can generally be divided into two types: embedding a conditional access system in a digital STB or separating a CAM from a digital STB. In the former manner, the system provider bums the personal data and selected service contents of a subscriber into a digital STB when providing the digital STB to the subscriber. If each system provider utilizes a different CAM and a different charging mechanism, a one-to-one cooperation mode between system operator and digital STB will be formed.

In order to avoid this phenomenon of local monopoly of system provider, the second manner has also been adopted all over the world. All the European specification DVB, US OpenCable and Japan specification ISDB have actively set up similar common interface standards to separate the CAM from the digital STB so as to enhance the standardized degree of digital STB products. For example, the Europe has already set up the DVB common interface specification (DVB-CI) of CAM. A separate CAM can therefore interact with a digital STB via the common interface.

However, with continual popularity of personal computer, people can watch digital TV programs via a home personal computer in addition to using a TV set. The receiver of digital TV programs extends from digital TV set and digital STB to digital TV card used by a personal computer.

Although the present external CAMs make use of a 16-bit slot to connect a 68-pin PCMCIA interface, because they adopt the common interface standard instead of the conventional personal computer card interface specification, they cannot apply to a personal card interface reader in a computer. Owing to this reason, consumers those exploit a computer to watch digital TV programs via a digital TV card hardly use a CAM to increase payment services of the digital TV broadcast networks.

### SUMMARY OF THE INVENTION

One object of the present invention is to provide a dual interface conditional access device and a method for operating the same, which can make digital STBs exploiting the common interface specification and digital TV cards exploiting the personal computer card interface specification be able to perform descramble and decryption actions.

To achieve the above object, the present invention provides a dual interface conditional access device at least comprising a conditional access module, a personal computer card controller and an interface-connected unit. The conditional access module receives a first transport stream transmitted from the interface-connected unit and transforming to output a second transport stream or a third transport stream. The personal computer card controller transforms the second transport stream into a personal computer card interface data stream. The interface-connected unit is used for receiving the personal computer card interface data stream or the third transport stream and outputting to a personal computer card interface reader or a common interface reader.

The present invention also provides a method for operating a dual interface conditional access device comprising the following steps. First, a first transport stream is received. A descramble action is then carried out to determine whether the first transport stream is an encrypted signal. A decryption information is read to decrypt the encrypted signal if the first transport stream is an encrypted signal. Next, the common interface unit can judge the interface-connected unit as "personal computer card interface reader" mode and receive an enable signal or not. If the answer is yes, a second transport stream is output, and the second transport stream is transformed to a personal computer card interface data stream, and the personal computer card interface data stream is then output; if the answer is no, a third transport stream is output.

### BRIEF DESCRIPTION OF THE DRAWINGS

The various objects and advantages of the present invention will be more readily understood from the following detailed description when read in conjunction with the appended drawing, in which:
Fig. 1 is a block diagram of a dual interface conditional access device according to a preferred embodiment of the present invention;
Fig. 2 is an application diagram of a dual interface conditional access device according to a preferred embodiment of the present invention; and
Fig. 3 is a flowchart of a method for operating a dual interface conditional access device according to a preferred embodiment of the present invention.

### DETAILED DESCRIPTION OF THE PREFERRED EMBODIMENTS

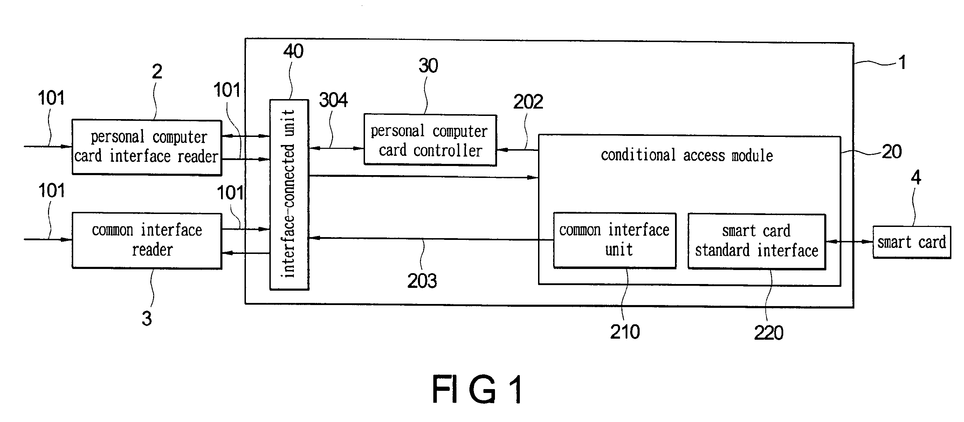

Fig. 1 is a block diagram of a dual interface conditional access device according to a preferred embodiment of the present invention. As shown in Fig. 1, a dual interface conditional access device 1 of the present invention comprises a conditional access module 20, a personal computer card controller 30 and an interface-connected unit 40.

The conditional access module 20 receives a first transport stream 101 transmitted from the interface-connected unit 40 and the first transport stream 101 can be the stream received from a personal computer card interface reader 2 or a common interface reader 3, and transforms to output a second transport stream 202 or a third transport stream 203 after a descramble procedure. The conditional access module 20 can be controlled by an enable signal received by the interface-connected unit 40 to determine to output either the second transport stream 202 or the third transport stream 203. The first transport stream 101, the second transport stream 202 and the third transport stream 203 can be video streams, audio streams or data streams. The transformed second transport stream 202 and third transport stream 203 are descrambled transport streams. Besides, the conditional access module 20 further comprises a common interface unit 210 and a smart card standard interface 220. The first transport stream 101 is transformed into the third transport stream 203 via the common interface unit 210. The conditional access module 20 can get decryption information in a smart card 4 via the smart card standard interface 220 to perform the decryption operation.

If the conditional access module 20 determines to output the second transport stream 202, the personal computer card controller 30 is used to transform the second transport stream 202 into a personal computer card interface data stream 304. Finally, the interface-connected unit 40 outputs the personal computer card interface data stream 304 to the personal computer card interface reader 2 (e.g., a digital TV card used by a computer), or outputs the third transport stream 203 to the common interface reader 3 (e.g., a digital STB used by a TV). The interface-connected unit 40 is a slot of the personal computer card specification that integrates the pin definitions of the personal computer card interface specification and the common interface specification.

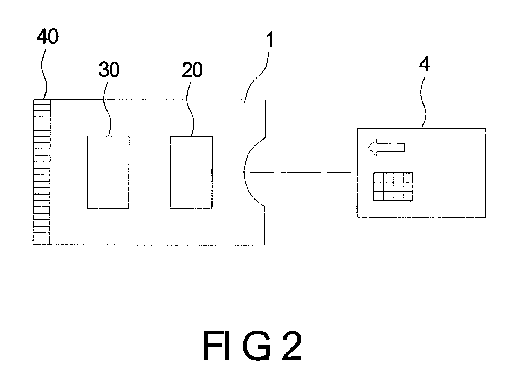

Fig. 2 is an application diagram of a dual interface conditional access device according to a preferred embodiment of the present invention. As shown in Fig. 2, the conditional access module 20 and the personal computer card controller 30 are integrated into a dual interface conditional access device 1. The conditional access module 20 is then used to read data in the smart card 4 to decrypt an encrypted transport stream. Next, the decrypted transport stream is output via the interface-connected unit 40. The interface-connected unit 40 is a slot of the personal computer card specification that integrates the pin definitions of the personal computer card interface specification and the common interface specification. Thereby, the dual interface conditional access device 1 can thus be plugged into the personal computer card interface reader 2 (e.g., a digital TV card used by a computer) or the common interface reader 3 (e.g., a digital STB used by a TV) to output the descrambled and decrypted transport stream.

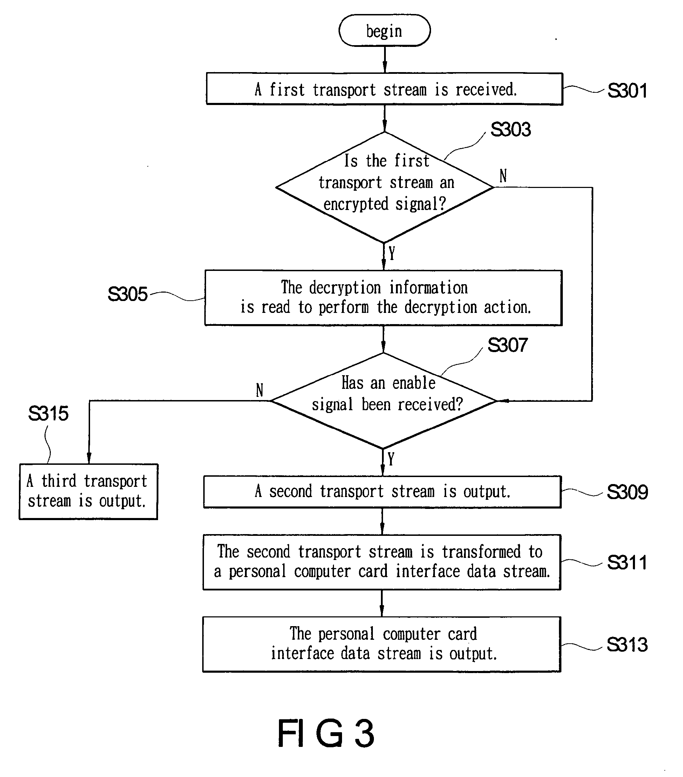

Fig. 3 is a flowchart of a method for operating a dual interface conditional access device according to a preferred embodiment of the present invention. First, a first transport stream 101 is received via an interface-connected unit 40 (Step 301). The first transport stream 101 can be a video stream, an audio stream or a data stream. Next, a conditional access module 20 performs a descramble action to determine whether the first transport stream 101 is an encrypted signal (Step 303). If the answer is yes, a smart card standard interface 220 in the conditional access module 20 is used to read decryption information in a smart card 4 to execute a decryption operation (Step S305). After Step S305 or the answer in Step 303 is no, whether an enable signal transmitted from an interface-connected unit 40 has been received is determined (Step S307). If the answer is yes, the conditional access module 20 outputs a second transport stream 202 (Step S309), a personal computer card controller 30 transforms the second transport stream 202 to a personal computer card interface data stream 304 (Step S311), and the personal computer card interface data stream 304 is then output (Step S313). If the answer in Step S307 is no, the conditional access module 20 outputs a third transport stream 203 (Step S315). The second transport stream 202 and the third transport stream 203 output by the conditional access module 20 are descrambled transport streams. A common interface unit 210 is used to transform the first transport stream 101 into the third transport stream 203. Finally, the personal computer card interface data stream 304 and the third transport stream 203 are output to a personal computer interface reader 2 (e.g., a digital TV card used by a computer) and the common interface reader 3 (e.g., a digital STB used by a TV) via an interface-connected unit 40, respectively.

To sum up, the present invention not only can make use of the same dual interface conditional access device 1 to accomplish the object of descramble and decryption on a digital STB exploiting the common interface specification and a digital TV card exploiting the personal computer card interface specification, but also has the following advantages:
1. Flexible application: Users not only can use the dual interface conditional access device 1 of the present invention on a TV set or a personal computer, but also can plug different smart cards 4 to carry out more diversified services.
2. Readers of simple architecture: The hardware architecture of readers (e.g., digital STB or digital TV card) matching the dual interface conditional access device 1 of the present invention can be simplified because it is not necessary to design special hardware components for descramble and decryption.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

## Claims

1. A dual interface conditional access device at least comprising:
an interface-connected unit;
a conditional access module for receiving a first transport stream transmitted from said interface-connected unit and transforming to output a second
transport stream or a third transport stream; and
a personal computer card controller for transforming said second transport stream output by said conditional access module into a personal computer card interface data stream;
wherein said interface-connected unit is used for receiving said personal computer card interface data stream or said third transport stream and outputting to a personal computer card interface reader or a common interface reader.

2. The dual interface conditional access device as claimed in claim 1, wherein said interface-connected unit is a slot of the personal computer card specification, and integrates the pin definitions of the personal computer card interface specification and the common interface specification.

3. The dual interface conditional access device as claimed in claim 1, wherein said interface-connected unit is used to receive an enable signal.

4. The dual interface conditional access device as claimed in claim 3, wherein said enable signal is used to control said conditional access module to output either said second transport stream or said third transport stream.

5. The dual interface conditional access device as claimed in claim 1, wherein said first transport stream, said second transport stream and said third transport stream are video streams, audio streams or data streams.

6. The dual interface conditional access device as claimed in claim 1, wherein said conditional access module further comprises:
a common interface unit for transforming said first transport stream to output said third transport stream; and
a smart card standard interface for getting decryption information in a smart card.

7. The dual interface conditional access device as claimed in claim 1, wherein said second transport stream and said third transport stream are descramble transport streams.

8. The dual interface conditional access device as claimed in claim 1, wherein said personal computer card interface reader is a digital TV card used by a computer.

9. The dual interface conditional access device as claimed in claim 1, wherein said common interface reader is a digital set-top box used by a television.

10. A method for operating a dual interface conditional access device comprising the steps of:
(a) receiving a first transport stream;
(b) performing a descramble action to determine whether said first transport stream is an encrypted signal;
(c) reading a decryption information to decrypt said encrypted signal if the answer in said step (b) is yes;
(d) determining whether an enable signal has been received;
(e) outputting a second transport stream if the answer is said step (d) is yes;
(f) transforming said second transport stream into a personal computer card interface data stream;
(g) outputting said personal computer card interface data stream; and
(h) outputting a third transport stream if the answer in said step (d) is no.
